# EUROPEAN PATENT SPECIFICATION

(11) **EP 2 234 343 B1**
(45) Date of publication and mention of the grant of the patent: **08.08.2012**
(21) Application number: 08870639.5
(22) Date of filing: 26.12.2008
(51) Int. Cl.: H04L 29/08, H04L 29/12, H04L 29/06

(54) **METHOD, DEVICE AND SYSTEM FOR SELECTING SERVICE NETWORK**
VERFAHREN, VORRICHTUNG UND SYSTEM ZUR AUSWAHL VON DIENSTNETZEN
PROCÉDÉ, DISPOSITIF ET SYSTÈME PERMETTANT DE SÉLECTIONNER UN RÉSEAU DE SERVICE

(30) Priority: 03.01.2008 CN 200810000123
(43) Date of publication of application: 29.09.2010
(73) Proprietor: Huawei Technologies Co., Ltd., Longgang District, Shenzhen Guangdong 518129 (CN)
(72) Inventor: LI, Hongyu, Longgang District 518129 Shenzhen (CN)
(74) Representative: Kreuz, Georg Maria
(86) International application number: PCT/CN2008/073763
(87) International publication number: WO 2009/089741

(56) References cited:
- EP-A1- 1 648 134
- EP-A1- 1 760 950
- CN-A- 1 859 407
- CN-A- 1 863 199
- CN-A- 101 052 015
- US-A1- 2002 073 182
- US-B1- 6 876 667
- CISCO SYSTEMS: "DHCP Address Allocation Using Option 82", , 1 January 2003 (2003-01-01), pages 1-22, XP002615280, Retrieved from the Internet: URL:http://www.cisco.com/en/US/docs/ios/12 _3t/12_3t4/feature/guide/gdhcpopt.pdf [retrieved on 2010-12-23]

## Description

The present invention relates to network communication technologies, and in particular, to a method, an apparatus, and a system for selecting a service network for a client or user in a network.

### BACKGROUND

Dynamic Host Configuration Protocol (DHCP) is a protocol for simplifying IP configuration management of hosts. The DHCP assigns IP addresses and configuration parameters such as IP address, subnet mask, default gateway, and domain name server for the client dynamically.

DHCP is made up of two parts: DHCP server and DHCP client. A DHCP server is primarily responsible for allocating an IP address or other configuration parameters for a DHCP client as requested by the client. The DHCP server generally exists on a router or layer-3 switch, or exists in the form of a dedicated DHCP server. A DHCP client is a host that uses the DHCP protocol to obtain configuration parameters.

The DHCP server can allocate an IP address to the DHCP client, also can manage the lease time of the IP address of the DHCP client, and implement time division multiplexing of IP addresses, and therefore, the DHCP protocol is prevalent now.

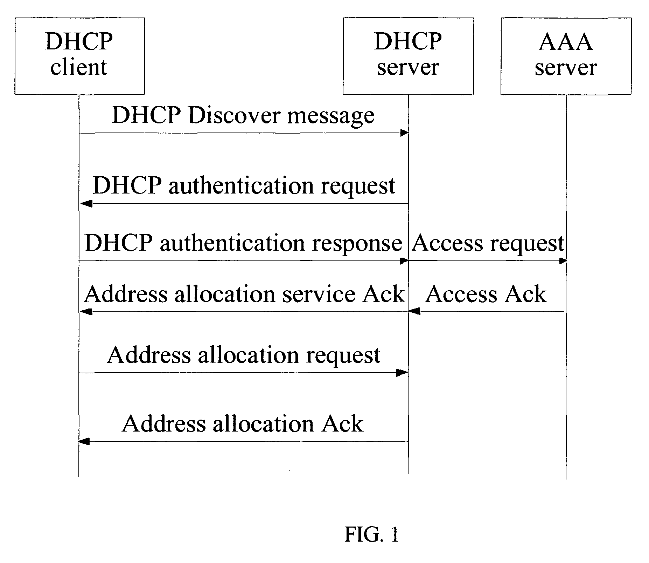

FIG. 1 is a flowchart of DHCP authentication in the prior art. The existing DHCP version 4 (DHCPv4) involves two types of authentication messages: DHCP Auth-request paired with DHCP Auth-response, and DHCP Extensible Authentication Protocol (EAP) messages. Either type of the messages may be applied in a DHCP authentication process. As shown in FIG. 1, a DHCP authentication process is as follows:
(1) A DHCP client accesses a network, and sends a DHCP Discover message to a DHCP server. The DHCP Discover message carries an authentication mode supported by the DHCP client. The authentication mode may be Challenge Handshake Authentication Protocol (CHAP) or Extensible Authentication Protocol (EAP) in the DHCP.
(2) After receiving the DHCP Discover message, the DHCP server sends a DHCP Auth-request or DHCP EAP message to the DHCP client. The DHCP Auth-request or DHCP EAP message may carry an EAP message. The EAP message carries information such as MD5 challenge.
(3) After receiving the DHCP Auth-request or DHCP EAP message, the DHCP client encrypts the MD5 challenge in the EAP message sent by the DHCP server to obtain an encrypted EAP message; and adds the encrypted EAP message into a DHCP Auth-response which is then sent to the DHCP server.
(4) After receiving the DHCP Auth-response, the DHCP server re-encapsulates the EAP message encrypted by the DHCP client into an Authentication Authorization Accounting (AAA) message, which is added into an Access-request message and sent to an Authentication Server (AS).
(5) Through the AAA message, the AS authenticates the DHCP client. If the authentication succeeds, the AS adds an EAP success message that is carried by the AAA message to the DHCP server through an Access-accept message. If the authentication fails, the AS sends an EAP Failure message that carries the AAA message to the DHCP server.
(6) The DHCP server constructs a DHCP Offer message. This message is carried in an EAP success message, and sent to the DHCP client. This message carries an IP address pre-allocated to the client.
(7) The DHCP client sends a DHCP Request message in response to the DHCP Offer message of the DHCP server, indicating that the DHCP client supports the authentication mode of the DHCP server and accepts the allocated IP address.
(8) The DHCP server sends a DHCP Ack message to the DHCP client.

The following problems have become apparent in the prior art: After receiving the DHCP Discover message from the client, the DHCP server searches for idle IP addresses among the IP addresses available from all service networks connected with the DHCP server, and allocates an IP address to the client. However, this IP address allocation mode does not allow for requirements imposed by the client onto the service network. Consequently, the IP address received by the DHCP server is probably not the IP address desired by the client. That is, if multiple service networks exist in the foregoing process, the DHCP client is unable to select the desired service network proactively.

EP 1 760 950 A1 describes a method for distributing a service according to a terminal type. The DHCP server issues an assigned IP address to the terminal after receiving a DHCP access request with terminal type information. The DHCP server does not forward the DHCP access request to the service server corresponding to the terminal type information. Preconfigured or stored service network configuration information and the structure and content of the service network selecting condition are not disclosed by said document.

US 2002/073182 A1 describes a DHCP relay server, but does not disclose using selection condition information to select a service network. The user ID, user terminal ID and the terminal MAC address all are static parameters. A user cannot customize its ID or MAC address. Thus the choice of the user is limited, and the IP address is assigned inflexibly.

### SUMMARY

The present invention provides a method for selecting a service network to improve the capabilities of the network in serving the client or user.

As a first aspect of the present invention a method according to claim 1 for selecting a service network is provided, in which the identification parameters corresponding to the service network are stored in the corresponding authenticator/proxy. The method includes:
receiving an address request message sent by a client or a user, wherein the address request message is carried in a Dynamic Host Configuration Protocol (DHCP) message, and the address request message carries a service network selecting condition; and
judging whether preconfigured or stored service network configuration information fulfills the service network selecting condition carried in the address request message, and forward the address request message to the service network that fulfills the service network selecting condition if the preconfigured or stored service network configuration information fulfills service network selecting condition;
wherein the service network selecting condition comprises at least:
   an option information type field for identifying information type as selection information;
   an option information length field for identifying length of an option information field; and
   the option information field for carrying selection condition information of the client or user, wherein the selection condition information of the client or user comprises at least one of: an Network Access Identifier (NAI) of the service network, an authentication mode supported by the service network, service network provider information, an authentication protocol selected by the client or user, an Internet Protocol (IP) address requested by the client or user and a Service Level Agreement (SLA) desired by the client or user.

In a particular implementation form the method for selecting a service network provides that, when multiple service networks, authenticators, or proxies exist, the address allocation request from the client or user carries service network selecting condition. In this way, the system can select an authenticator, proxy, or service network for the client or user according to the requirements imposed by the client or user onto the service network, and allocate an IP address compliant with the network service requirements to the client or user. Therefore, the present invention prevents "blind" allocation of IP addresses to the client or user, and improves the capabilities of the network in serving the client or user.

As a second aspect of the present invention an apparatus according to claim 3 for selecting a service network is provided to improve the capabilities of the network in serving the client or user.

The apparatus for selecting a service network includes:
a message receiving and sending unit, adapted to receive and send messages;
a configuring unit, adapted to configure or store configuration information of a service network of a service network selecting unit; and
a service network selecting unit, adapted to: judge whether the configuration information of the service network of the service network selecting unit meets service network selecting condition, where the service network selecting condition is carried in an address request message in a DHCP message received by the message receiving and sending unit; and notify the message receiving and sending unit to forward the address request message in the received DHCP message to the service network that meets the service network selecting condition if the configuration information meets the condition;
wherein the service network selecting condition comprise at least:
   an option information type field for identifying information type as option information;
   an option information length field for identifying length of an option information field; and
   the option information field for carrying selection condition information of a client or user, wherein the selection condition information of the client or user comprise at least one of: an Network Access Identifier (NAI) of the service network, an authentication mode supported by the service network, service network provider information, an authentication protocol selected by the client or user, an Internet Protocol (IP) address requested by the client or user and a Service Level Agreement (SLA) desired by the client or user.

Through the apparatus for selecting a service network it is provided that, when multiple service networks, authenticators, or proxies exist, the address allocation request from the client or user carries service network selecting condition. In this way, the service network selecting unit can select a service network for the client or user according to the requirements imposed by the client or user onto the service network, and allocate an IP address compliant with the network service requirements to the client or user. Therefore, the present invention prevents "blind" allocation of IP addresses to the client or user, and improves the capabilities of the network in serving the client or user.

As a third aspect of the present invention a system according to claim 7 for selecting a service network is provided to improve the capabilities of the network in serving the client or user.

The system for selecting a service network includes at least one first authenticator/proxy module, a first service network of the first authenticator/proxy module, at least one Authentication Authorization Accounting (AAA) server module, at least one DHCP server module, at least one second authenticator/proxy module and a second service network of the second authenticator/proxy module.

The first authenticator/proxy module is adapted to:
configure or store configuration information of the first service network of the first authenticator/proxy module, and judge whether the configuration information of the first service network meets service network selecting condition, where the service network selecting condition is carried in an address request message in a DHCP message sent by a DHCP client or user; and
forward the address request message to the first service network that meets the condition of the first authenticator/proxy module;
the AAA server module, adapted to authenticate the DHCP client or user;
the DHCP server module, adapted to allocate an Internet Protocol (IP) address to the DHCP client or user;
the second authenticator/proxy module is adapted to: configure or store configuration information of the second service network of the second authenticator/proxy module, and judge whether the configuration information of the second service network fulfills a service network selecting condition, wherein the service network selecting condition is carried in the address request message in the DHCP message sent by the DHCP client or user; and forward the address request message to the second service network that fulfills the service network selecting condition and of the second authenticator/proxy module;
wherein the service network selecting condition comprises at least:
   an option information type field for identifying an information type as option information;
   an option information length field for identifying length of an option information field; and
   the option information field for carrying selection condition information of the client or user, wherein the selection condition information of the client or user comprise at least one of: an Network Access Identifier (NAI) of the service network, an authentication mode supported by the service network, service network provider information, an authentication protocol selected by the client or user, an IP address requested by the client or user and a Service Level Agreement (SLA) desired by the client.

Through the system for selecting a service network the present invention provides that, when multiple service networks, authenticators, or proxies exist, the address allocation request sent by the client or user carries service network selecting condition. In this way, the authenticator/proxy module can select a service network for the client or user according to the requirements imposed by the client or user onto the service network, and allocate an IP address compliant with the network service requirements to the client or user. Therefore, the present invention prevents "blind" allocation of IP addresses to the client or user, and improves the capabilities of the network in serving the client or user.

### BRIEF DESCRIPTION OF THE DRAWINGS

FIG. 1 is a flowchart of DHCP authentication in the prior art;
FIG. 2 is a flowchart of a method for selecting a service network in an embodiment of the present invention;
FIG. 3 is a detailed flowchart of a method for selecting a service network in an embodiment of the present invention;
FIG. 4 is a flowchart of a method for selecting a service network in the first embodiment of the present invention;
FIG. 5 is a flowchart of a method for selecting a service network in the second embodiment of the present invention;
FIG. 6 is a flowchart of a method for selecting a service network in the third embodiment of the present invention;
FIG. 7 is a flowchart of a method for selecting a service network in the fourth embodiment of the present invention;
FIG. 8 is a schematic diagram of an apparatus for selecting a service network in an embodiment of the present invention;
FIG. 9 is a schematic diagram of an apparatus for selecting a service network in the first embodiment of the present invention;
FIG. 10 is a schematic diagram of an apparatus for selecting a service network in the second embodiment of the present invention; and
FIG. 11 is a schematic diagram of an apparatus for selecting a service network in the fourth embodiment of the present invention.

### DETAILED DESCRIPTION OF THE EMBODIMENTS

In order to provide a client or user with a service network that meets requirements of the client or user and improve capabilities of serving the client or user, the embodiments of the present invention provide a method, an apparatus, and a system for selecting a service network. In the embodiments of the present invention, a service network refers to a network provided by a Service Provider (SP), for example, China Telecom, China Netcom, China Mobile, and so on. In the embodiments of the present invention, a client refers to a device that provides DHCP client functions, and clients include at least but are not limited to various terminal devices, or devices in a Customer Premises Network (CPN).

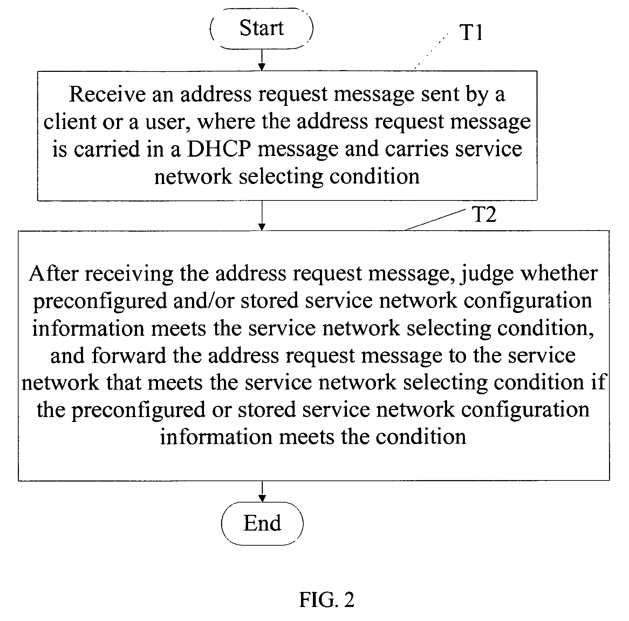

As shown in FIG. 2, a method for selecting a service network in an embodiment of the present invention includes the following steps:
T1: Receive an address request message sent by a client or a user, where the address request message is carried in a DHCP message and carries service network selecting condition.
T2: After receiving the address request message, judge whether preconfigured and/or stored service network configuration information meets the service network selecting condition, and forward the address request message to the service network that meets the service network selecting condition if the preconfigured or stored service network configuration information meets the condition.

Therefore, the authenticators/proxies may select a service network for the client or user according to requirements of the client or user, and allocate an IP address that meets requirements of the service network to the client or user, thus improving capabilities of serving the client or user.

In order to make the merits of the technical solution under the present invention clearer, the following describes the embodiments of the present invention in more detail with reference to accompanying drawings.

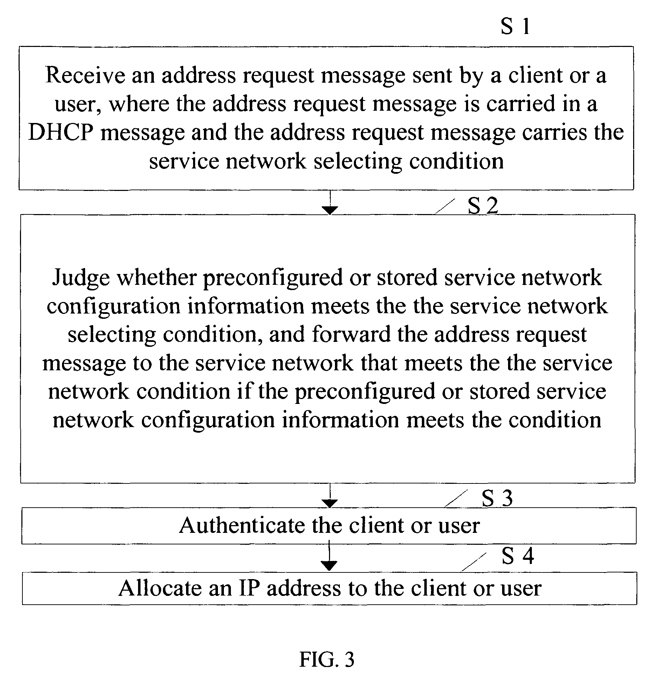

As shown in FIG. 3, a method for selecting a service network in an embodiment of the present invention includes the following steps:
S1: Receive an address request message that carries service network selecting condition from a client or user.
S2: After receiving the address request message, judge whether prcconfigurcd and/or stored service network configuration information meets the service network selecting condition, and forward the address request message to the service network that meets the service network selecting condition if the preconfigured or stored service network configuration information meets the service network selecting condition.

After the address request message of the client or user is sent to the service network, the method for selecting a service network further includes the following steps:
S3: The service network authenticates the client or user after receiving the address request message.

Depending on the setting of the SP, the authentication process is optional. That is, the SP network may choose not to authenticate the client or user, or perform implicit authentication according to the location information of the client or user (for example, information carried in Option 82), or the source MAC address of the client or user. The authentication process may be based on the prior art, for example, DHCP authentication, or may be other authentication modes.

S4: After completion of the authentication process, the service network allocates an IP address to the client or user.

Now the service network has allocated an IP address that meets the requirements of the client or user to the client or user.

Before S1, the method may further include a step of configuring and/or storing configuration information of the service network.

The method of defining service network selecting condition (DHCP selection option) is shown in Table 1. The service network selecting condition includes three parts: option information type field, option information length field, and option information field. The service network selecting condition may be extended as required to include more information.

**Table 1**

| Option information type | Option information length | Option information field | | | | | |
|---|---|---|---|---|---|---|---|
| 345 | N | i1 | i2 | i3 | i4 | ... | iN |

In Table 1, the option information type "345" indicates that the message is a DHCP selection option. Given above is only an example of information type. In practice, the information type may be defined according to the DHCP protocol, or may be customized. The option information length indicates the length of the option information field.

The option information field includes detailed option information of the client or user, and may include only a single entry of information, for example, SP service network information, or authentication protocol expected by the client or user, or IP address requested by the client or user, or Service Level Agreement (SLA) desired by the client or user.

Besides, the foregoing information may be expressed in the form of suboptions. That is, such information is written into suboption fields. In this case, the suboption fields are contents of the option information field. Table 2 defines contents of the suboption fields. In this way, the option information field may include a single entry of information, or suboption fields, or combination thereof.

**Table 2**

| Suboption type field | Suboption length field | Suboption information field | | | | | |
|---|---|---|---|---|---|---|---|
| 1 | N | i1 | i2 | i3 | i4 | ... | iN |
| 2 | N | i1 | i2 | i3 | i4 | ... | iN |
| 3 | N | i1 | i2 | i3 | i4 | ... | iN |
| 4 | N | i1 | i2 | i3 | i4 | ... | iN |

In Table 2, the suboption type field 1 represents information about the service network of the SP, for example, Network Access Identifier (NAI), client or user name with a domain, or other information that represents the service network of the SP.

Suboption type field 2 represents the authentication protocol desired by the client or user, for example, DHCP authentication protocol. It may also be a specific authentication method in an authentication protocol, for example, EAP or CHAP in the DHCP authentication.

Suboption type field 3 represents the IP address requested by the client or user, for example, an IP address in an IP network segment of a service network, or a permanent IP address.

Suboption type field 4 represents the SLA expected by the client or user, for example, bandwidth or Quality of Service (QoS) expected by the client or user.

The foregoing suboption fields are for the exemplary purpose only. In practice, the suboption fields may be extended to obtain more suboption fields as required.

The data input format of the DHCP selection option is described below with examples.

If the service network of China Telecom and the service network of China Netcom coexist in the network, the NAI of the service network may be defined as ChinaTelecom and ChinaNetcom respectively. If the client or user expects to access the service network of China Telecom and expects to use EAP encapsulated DHCP authentication method, the requirement of the client or user about the service network is input into the option information field of the DHCP selection option in the form of suboption field. Therefore, the suboption information field of suboption field 1 is set to ChinaTelecom, and the suboption information field of suboption field 2 is set to DHCP+EAP. Therefore, the foregoing information may define the format of DHCP selection option, as shown in Table 3:

**Table 3**

| Option information type | Option information length | Option information field | | | | | |
|---|---|---|---|---|---|---|---|
| | | Suboption field 1 | | | Suboption field 2 | | |
| 345 | 24 | 1 | 12 | ChinaTelecom | 2 | 8 | DHCP+EAP |

The service network configuration information may include but is not limited to: authentication mode supported by the service network, NAI of the service network, bandwidth provided by the service network, and may be configured by the authenticator/proxy as required.

Therefore, at least three scenarios are possible for step S3, in which each authenticator/proxy judges whether the configuration information of the service network meets the service network selecting condition of the client or user:

First scenario: The service network configuration information is exactly the same as the contents of the service network selecting condition of the client or user.

For example, the service network selecting condition of the client or user include: The client or user expects to access the service network of ChinaTelecom, and expects the service network to support the DHCP authentication mode. It is assumed that the service network configuration information stored in an authenticator/proxy reveals that the configuration information of a service network of the authenticator/proxy includes: The NAI is ChinaTelecom, and the supported authentication mode is DHCP authentication mode. After making comparison and determining that the service network selecting condition of the client or user are consistent with the service network configuration information, the authenticator/proxy sends the address request message of the client or user to the ChinaTelecom network of the authenticator/proxy.

Second scenario: The service network configuration information is partly the same as the contents of the service network selecting condition of the client or user.

For example, the service network selecting condition of the client or user include: The client or user expects to access the service network of ChinaTelecom. It is assumed that the service network configuration information stored in an authenticator/proxy reveals that the configuration information of a service network of the authenticator/proxy includes: The NAI is ChinaTelecom, and the supported authentication mode is DHCP authentication mode. After comparing the service network selecting condition of the client or user with the service network configuration information, the authenticator/proxy finds that the NAI of a service network of the authenticator/proxy is ChinaTelecom, and therefore, the authenticator/proxy also sends the address request message of the client or user to the ChinaTelecom network of the authenticator/proxy.

In another example, the client or user expects to access ChinaTelecom.sz as a service network, the service network configuration information stored in an authenticator/proxy reveals that the NAI of the service network is ChinaTelecom, and the options configured by the authenticator/proxy are partial matching. In this case, it is deemed that the options are fulfilled. Alternatively, the client or user expects to access ChinaTelecom as a service network but the service network configuration information stored in an authenticator/proxy reveals that the NAI of the service network is ChinaTelecom.sz, and the options configured by the authenticator/proxy are partial matching. In this case, it is deemed that the options are fulfilled.

Third scenario: In the service network selecting condition, the value of one or more parameters falls within the value range of the same parameter in the service network configuration parameters.

For example, the service network selecting condition of the client or user include: The client or user expects the service network to provide 5M bandwidth. It is assumed that the service network configuration information stored in an authenticator/proxy reveals that the configuration information of a service network of the authenticator/proxy indicates: This service network provides 10M bandwidth. Therefore, the service network can meet bandwidth requirements of the client or user, and the authenticator/proxy sends the address request message of the client or user to the service network.

Enumerated above are only three matching relations between "service network selecting condition" and "service network configuration information". However, the setting of the trigger conditions of forwarding is not limited to the matching relations enumerated above. In practice, the trigger conditions of forwarding may be configured on the authenticator/proxy as required, namely, "fulfilling options" is defined as required. For example, it is deemed that the options are "fulfilled" only if the service network configuration information fully matches the service network selecting condition of the client or user; or, it is deemed that the options are "fulfilled" if the service network configuration information partly matches the service network selecting condition of the client or user, and so on.

The implementation process of the embodiments of the present invention is detailed below with reference to different scenarios.

### First Embodiment

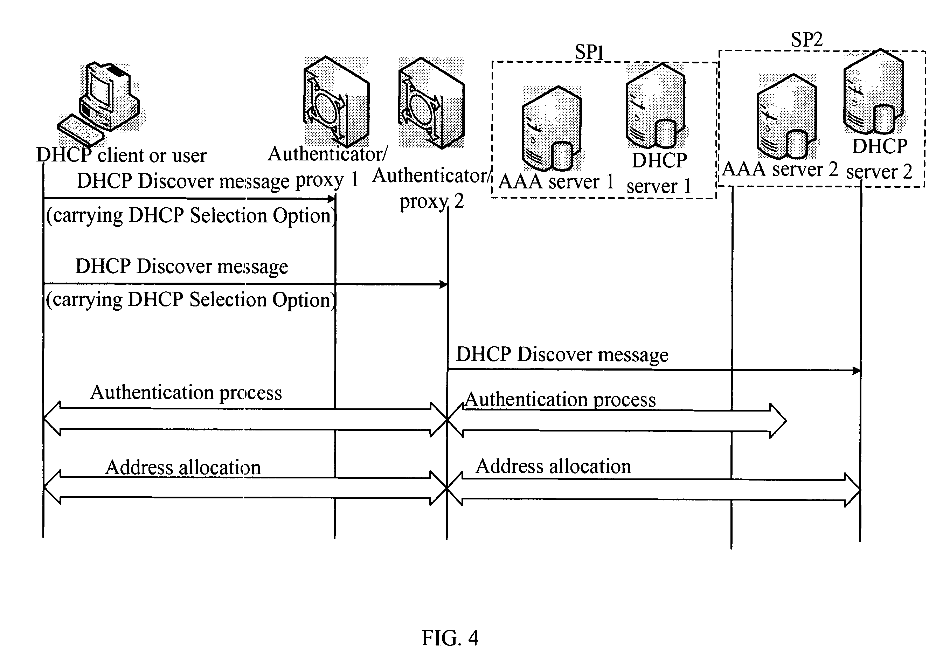

As shown in FIG. 4, in this embodiment, the client or user get connected with multiple authenticators/proxies via access and aggregate network. Each authenticator/proxy is connected to the corresponding service network (namely, SP network) through their IP network respectively. The client or user may be a wired or wireless terminal of any type, and provides functions of a DHCP client or user. The authenticator/proxy provides functions of a DHCP proxy or DHCP relay, and provides functions of an authenticator/AAA client or user, and the configuration information of the SP network of the authenticator/proxy is configured on the authenticator/proxy. The service network configuration information in each authenticator/proxy may be configured dynamically or statically. If it is configured dynamically, a policy server or another control device of the SP may configure the authenticator/proxy dynamically through a Diameter protocol or another protocol, and modify the service network configuration information dynamically.

An SP network includes an Authentication Authorization Accounting (AAA) server such as Radius server and a DHCP server.

In this embodiment, SP1 is ChinaNetcom and the network of SP1 supports only DHCP+CHAP authentication, SP2 is ChinaTelecom and the network of SP2 supports DHCP+EAP authentication. The NAI carried in the DHCP selection option sent by the client or user is ChinaTelecom, and the client or user expects to use the DHCP+EAP authentication mode. Therefore, the method for selecting a service network in this embodiment includes the following steps:
S 11: The DHCP client or user sends a DHCP Discover message carrying DHCP selection option to every authenticator/proxy through broadcasting. The DHCP selection option include the information about the service network of the SP (such as NAI), the authentication protocol expected by the client or user, the IP address requested by the client or user, and the SLA desired by the client or user.
S12: After receiving the DHCP Discover message, each authenticator or proxy judges whether the corresponding network fulfills the requirements of the client or user according to the information in the DHCP selection option.

In this embodiment, according to the NAI in the DHCP selection option and the service network configuration information stored in authenticator/proxy 2, authenticator/proxy 2 determines that the service network required by the client or user is the SP2 network of authenticator/proxy 2. Therefore, authenticator/proxy 2 forwards the DHCP Discover message to a DHCP server of the SP2 network.

S13: The SP2 network authenticates the client or user.

Depending on the setting of the SP, the authentication process is optional. That is, the SP network may choose not to authenticate the client or user, or perform implicit authentication according to the location information of the client or user (for example, information carried in Option 82), or the source MAC address of the client or user. The authentication process may be based on the prior art, or may be other authentication modes.

In this embodiment, it is assumed that the client or user needs to be authenticated. If the authentication process is based on the prior art, the authentication process may include the following steps:
S 131: The DHCP server checks the parameters in the DHCP Discover message, returns a DHCP Offer (address allocation service confirmation) message to authenticator/proxy 2, and provides the DHCP client or user with a vacant IP address and other DHCP configuration information such as subnet mask and default gateway.
S132: After receiving the DHCP Offer message, authenticator/proxy 2 adds an authentication option that indicates the authentication mode supported by authenticator/proxy 2, and records the vacant IP address allocated by the DHCP server to the DHCP client or user. Authenticator/proxy 2 may replace the vacant IP address with a local IP address which is locally available to the DHCP client or user, and then forward the DHCP Offer message to the DHCP client or user.
S133: The DHCP client or user sends a DHCP Request (address allocation request) message in response to the DHCP Offer message of authenticator/proxy 2. The DHCP Offer message carries the authentication mode "DHCP+CHAP" supported by authenticator/proxy 2 and the provided IP address, and indicates that the DHCP client or user has selected authenticator/proxy 2 that supports the corresponding authentication mode and accepts the IP address provided by authenticator/proxy 2.
S 134: After receiving the DHCP Request message, authenticator/proxy 2 sends an EAP-Request/Identity query request to the DHCP client or user (this query request is carried in a DHCP Ack (address allocation acknowledgement) message), and delivers a "false" lease time available only for authenticating the DHCP client or user through a DHCP Ack message. This lease time enables the DHCP client or user to respond to the EAP authentication message rapidly, and reserves enough time for authenticator/proxy 2 to return an EAP authentication message to the DHCP client or user.
S134: After receiving the DHCP Ack message, the DHCP client or user sets timers T1 and T2 according to the lease time. Upon expiry of T1, the DHCP client or user sends a DHCP Request message to trigger update of the lease time, and the DHCP Request message carries an EAP-Response/Identity message to authenticator/proxy 2.
S135: Authenticator/proxy 2 re-encapsulates the EAP-Response/Identity message of the DHCP client or user into an AAA message, and sends the AAA message to the AAA server.
S136: The EAP method is negotiated and exchanged between the DHCP client or user, authenticator/proxy 2, and the AAA server.

The foregoing process, a DHCP Request/Ack message is used to carry the EAP message for interaction between the DHCP client or user and authenticator/proxy 2, and an AAA message is used to carry the EAP message for interaction between authenticator/proxy 2 and the AAA server until completion of the EAP authentication process.

Upon receiving a DHCP Request message, authenticator/proxy 2 uses a DHCP Ack message to carry the EAP message, and delivers a "false" lease time which is available only for authenticating the DHCP client or user. Upon receiving the DHCP Ack message, the DHCP client or user resets the timers T1 and T2 according to the lease time; upon expiry of T1 or T2, the DHCP client or user triggers update of the lease time through a DHCP Request message in order to carry the EAP message.

S137: The AAA server notifies authenticator/proxy 2 of the authentication result.

If the authentication fails, the EAP failure message is encapsulated into the AAA message, and sent to authenticator/proxy 2.

If the authentication succeeds, the EAP success message and the corresponding EAP derivative key are encapsulated into the AAA message, and sent to authenticator/proxy 2.

S14: After completion of the authentication process, the DHCP server allocates an IP address to the client or user.

In the foregoing process, each authenticator/proxy may set its judgment conditions. For example, for the DHCP selection option carried in the DHCP Discover message of the client or user, each authenticator/proxy may set the condition of forwarding the DHCP Discover message, namely, the DHCP Discover message can be forwarded if the service network selecting condition of the client or user are partly fulfilled, or the DHCP Discover message can be forwarded if the service network selecting condition of the client or user is fully fulfilled.

For example, the SP2 network does not support DHCP+EAP, but it is set in authenticator/proxy 2 that the DHCP Discover message can be forwarded if authenticator/proxy 2 fulfills the NAI required by the DHCP client. In this case, upon receiving the DHCP Discover message, authenticator/proxy 2 determines that the NAI in the DHCP selection option is the same as the NAI of the service network of authenticator/proxy 2, and therefore, the DHCP Discover message can still be forwarded.

Meanwhile, if the DHCP client receives no response (the response may be a DHCP OFFER message, or another message if a different authentication method is applied) in a long period after sending the DHCP Discover message, the client may modify the parameters in the DHCP selection option and send the message again. For example, the DHCP client may modify the NAI in the DHCP selection option from ChinaTelecom to ChinaNetcom, and send the message to every authenticator/proxy again. Before modifying the parameters in the DHCP selection option and sending the message again, the DHCP client may send the message repeatedly. After multiple attempts of sending the message fail, the DHCP client may modify the corresponding parameters, and send the DHCP Discover message that carries the DHCP selection option again.

Moreover, if multiple service networks meet the requirements of the client or user, all the service networks that meet the requirements receive the address allocation request message of the client, and allocate an IP address to the client or user. The client or user selects the IP address which arrives at the client or user first. This process is the same as the process of allocating an IP address through a DHCP protocol in the prior art.

The authenticator/proxy, AAA server, and DHCP server in this embodiment is a logical function. In practice, they may be stand-alone physical nodes or combined in a physical node arbitrarily or set into other network devices. When all the three entities are combined into a physical entity, the IP network may be used for connecting the physical entity with other parts of the SP network or with the access network.

### Second Embodiment

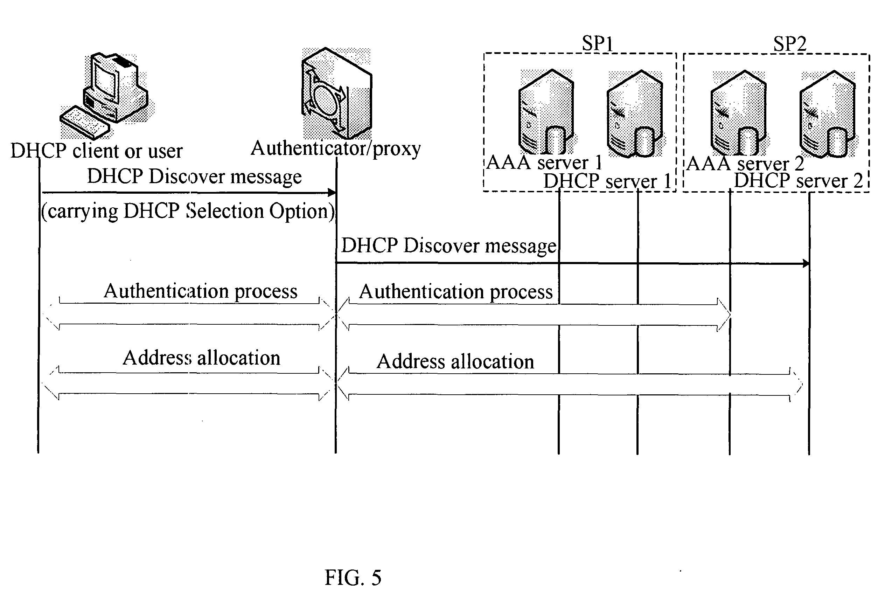

In this embodiment, as shown in FIG. 5, the DHCP client or user accesses the convergence network to get connected with the authenticator/proxy, and multiple SP networks share an authenticator/proxy. The authenticator/proxy is connected with multiple SP networks through an IP network. The DHCP client or user may be a wired or wireless terminal of any type, and provides functions of a DHCP client or user. The authenticator/proxy provides functions of a DHCP proxy or DHCP relay, and may provide functions of an authenticator/AAA client or user, and the configuration information of each SP network connected with the authenticator/proxy (for example, NAI, capabilities) is configured on the authenticator/proxy. Likewise, the network identifier parameters in each authenticator/proxy may be configured dynamically or statically. The configuration mode is the same as the configuration mode described in the first embodiment above.

Both the SP1 network and the SP2 network include an AAA server (such as Radius Server) and a DHCP server. The IP network(s) may be multiple stand-alone IP networks or a single network.

In this embodiment, it is assumed that SP1 is ChinaTelecom and the network of SP1 supports only DHCP+CHAP authentication, SP2 is ChinaNetcom and the network of SP2 supports DHCP+EAP authentication. The NAI carried in the DHCP selection option sent by the client or user is ChinaNetcom, and the client or user expects to use the DHCP+EAP authentication mode. The detailed process is as follows:
S21: The DHCP client or user sends a DHCP Discover message carrying DHCP selection option. The DHCP selection option include the information about the service network of the SP (such as NAI), the authentication protocol expected by the client or user, the IP address requested by the client or user, and the SLA desired by the client or user.
S22: After receiving the message, the authenticator/proxy determines that the corresponding SP2 network meets the requirements of the client or user according to the NAI in the DHCP selection option and the service network configuration information stored in the authenticator/proxy, and therefore, forwards the DHCP Discover message that carries DHCP selection option to the DHCP server of SP2.
S23: The SP2 network authenticates the DHCP client or user and allocates an IP address to the DHCP client or user.

In this embodiment, the authentication process is also optional. Depending on the setting of the SP, the SP network may choose not to authenticate the client or user, or perform implicit authentication according to the location information of the client or user (for example, information carried in Option 82), or the source MAC address of the client or user. The authentication process may be based on the prior art, or may be other authentication modes. If authentication is performed, the authentication process and the address allocation process in this embodiment are the same as those in the first embodiment. Also, in this embodiment, the authentication mode is not limited to the authentication modes enumerated in the "BACKGROUND" above.

In practice, depending on the authentication mode, the authenticator/proxy may set its forwarding conditions, and therefore, forward the DHCP Discover message that carries DHCP selection option from the DHCP client or user to the DHCP server in the SP network completely as required; or forward a part of the information to the DHCP server in the corresponding SP network; or extract information in the DHCP selection option, add the information into an authentication protocol, and send the authentication protocol to the corresponding AAA server.

If the authenticator/proxy finds no SP network compliant with the DHCP selection option in the corresponding SP networks, the authenticator/proxy discards the DHCP Discover message, or broadcasts the message to all SPs.

If the DHCP client or user receives no response within a long period after sending the DHCP Discover message, the handling method is the same as the counterpart in the first embodiment.

### Third Embodiment

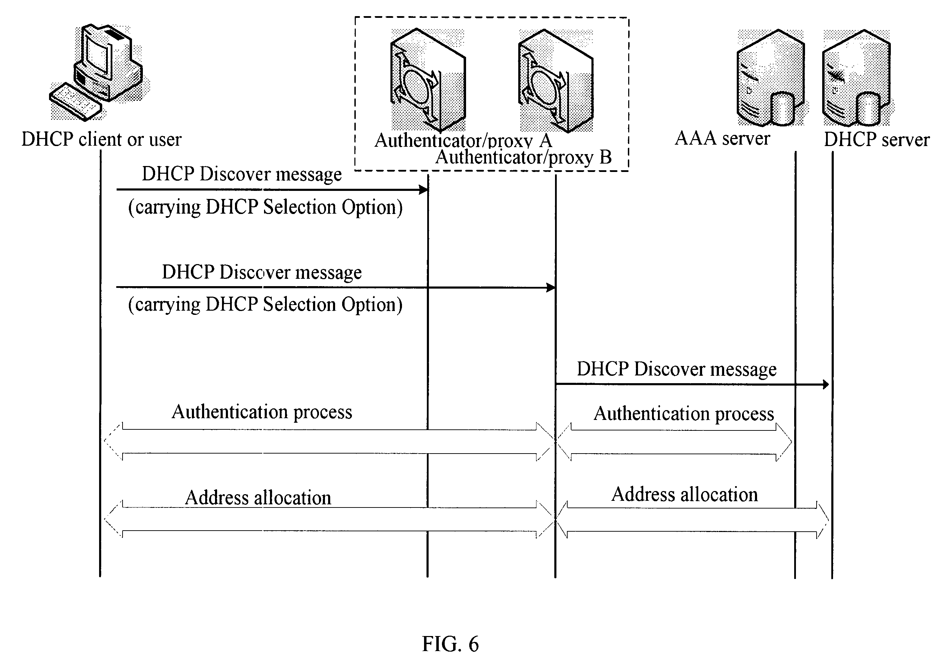

In the first embodiment and the second embodiment, the authenticator/proxy may be composed of multiple child authenticators/proxies. As shown in FIG. 6, authenticator/proxy 1 is composed of child authenticator/proxy A and child authenticator/proxy B.

When both child authenticator/proxy A and child authenticator/proxy B are valid, or in a load sharing mode or in an active-and-standby relation, after receiving a DHCP Discover message carrying DHCP selection option, authenticator/proxy 1 may make judgment and select the SP network according to the parameters in the DHCP selection option as described in the first embodiment and the second embodiment, and may further select a child authenticator/proxy to forward the message and handle the subsequent data of the client or user according to the current load of authenticator/proxy 1, network resource conditions, a traffic sharing policy, and a sharing policy of the client or user. Meanwhile, one of the child authenticators/proxies may be selected through a preset algorithm or through negotiation based on a protocol.

In this embodiment, through negotiation between child authenticator/proxy A and child authenticator/proxy B, child authenticator/proxy B forwards the DHCP Discover message of the DHCP client or user.

Afterward, the SP network authenticates the DHCP client or user and allocates an IP address to the DHCP client or user. The authentication process is optional. Depending on the setting of the SP, the SP network may choose not to authenticate the client or user, or perform implicit authentication according to the location information of the client or user (for example, information carried in Option 82), or the source MAC address of the client or user. The authentication process may be based on the prior art, or may be other authentication modes. If authentication is performed, the authentication process and the address allocation process in this embodiment are the same as those in the first embodiment.

The DHCP selection option in embodiments 1-3 may be replaced with the existing DHCP options in the prior art.

Among DHCP options, DHCP option 60 carries Vendor information and Service Option information. Such information is carried in DHCP option 60 when the client or user sends a DHCP request. DHCP option 60 is designed to identify the client or user type so that the DHCP server identifies the user service type and allocates a different IP address to each client or user according to the user service type. DHCP option 82 is inserted by a network device into a DHCP message sent by the client or user, and is designed to identify the access location of the client or user. DHCP option 82 carries location information of the client or user, and the physical or logical port information. The location information and the physical or logical port information may indicate the frame, slot, port of the device accessed by the user; or the PVC, VLAN, channel, or device type; or the applicable service type such as Set Top Box (STB), PC, IPTV, RG, and Home Gateway (HG); or manufacturer code, or other agreed information.

Taking DHCP option 82 as an example, when the access device of a DHCP client or user transmits a DHCP request sent by the DHCP client or user, DHCP option 82 is embedded into the DHCP request from the client or user. After identifying the DHCP request forwarded by the authenticator/proxy, the DHCP server performs the corresponding IP address allocation process according to information in the request.

In this embodiment, DHCP option 60 is taken as an example. In practice, other DHCP options may be applied, or a combination of DHCP option 82 and DHCP option 60 may be applied.

If DHCP option 82 or DHCP option 60 takes the place of the DHCP selection option in embodiments 1-3, each authenticator/proxy selects the service network compliant with client or user requirements about the service network to allocate an IP address to the client or user according to the requirement information carried in DHCP option 82 or DHCP option 60.

### Fourth Embodiment

This embodiment uses the network architecture in the first embodiment to describe the flowchart, in which DHCP option 82 or DHCP option 60 carries information about the requirements imposed by the client or user onto the service network.

In this embodiment, it is assumed that the SP network is an IPTV network, and the SP network is an Internet network. The information carried in DHCP option 60 sent by the client or user is PC.

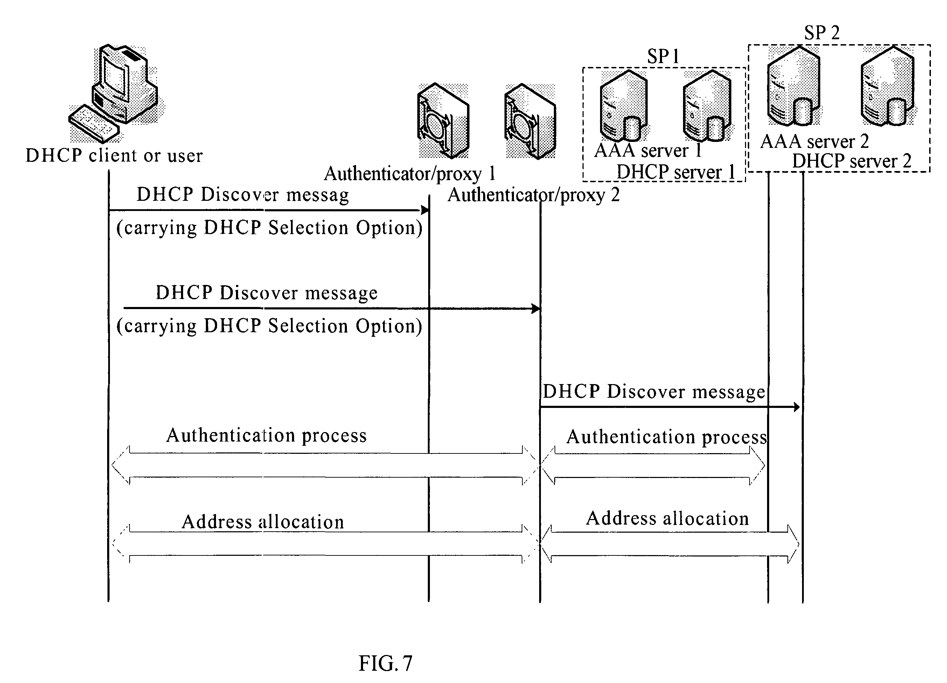

As shown in FIG. 7, the detailed process is as follows:
S41: The DHCP client or user sends a DHCP Discover message to each authenticator/proxy through broadcasting. The message carries DHCP option 60 information.
S42: After receiving the DHCP Discover message, each authenticator or proxy judges whether the corresponding network fulfills the requirements of the client or user according to the information in DHCP option 60.

In this embodiment, according to DHCP option 60 in the DHCP selection option, authenticator/proxy 2 determines that the service network required by the client or user is the SP2 network of authenticator/proxy 2. Therefore, authenticator/proxy 2 forwards the DHCP Discover message to a DHCP server of the SP2 network.

S43: The SP2 network authenticates the client or user, and allocates an IP address to the client or user.

Depending on the setting of the SP, the SP network may choose to authenticate the client or user or not. If the SP network chooses to authenticate the client or user, the authentication process and the IP address allocation process are the same as the counterpart in the first embodiment.

After the access device inserts DHCP option 82 into the DHCP Discover message sent by the client or user, the process of selecting a service network by using service network selecting condition carried in DHCP option 82 is the same as the process of selecting a service network by using DHCP option 60 above.

Through the foregoing embodiments, a service network compliant with the requirements of the client or user is selected for the client or user, and the QoS of the network is improved.

Corresponding to the method for selecting a service network above, an apparatus for selecting a service network is provided in an embodiment of the present invention.

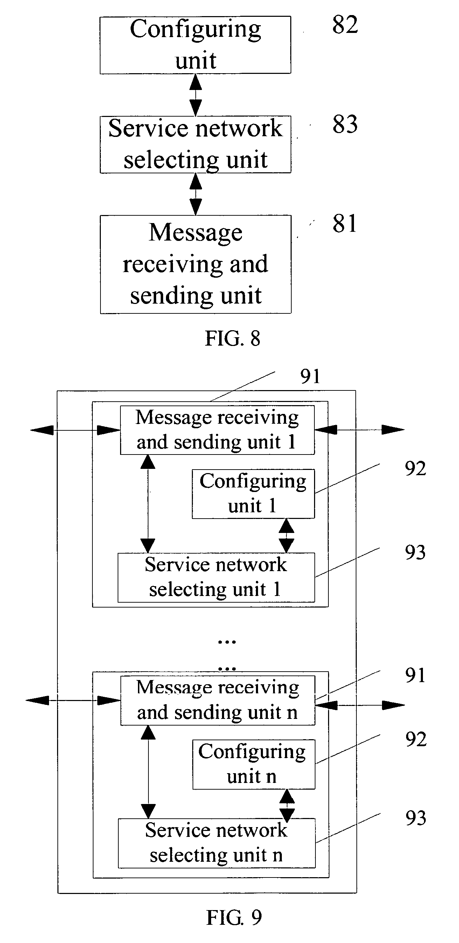

As shown in FIG. 8, an apparatus for selecting a service network in an embodiment of the present invention includes:
a message receiving and sending unit 81, adapted to receive and send messages;
a configuring unit 82, adapted to configure and/or store configuration information of a service network of a service network selecting unit 83; and
the service network selecting unit 83, adapted to: judge whether the configuration information of the service network of the service network selecting unit meets service network selecting condition, where the service network selecting condition is carried in an address request message in a DHCP message received by the message receiving and sending unit 81; and instruct the message receiving and sending unit 81 to forward the address request message in the received DHCP message to the service network that meets the service network selecting condition if the configuration information meets the condition.

Therefore, after receiving the address request message, the service network selecting unit 83 reads the service network configuration information stored in the configuring unit 82 one by one or in other ways, compares the information with the service network selecting condition in the address request message, and forwards the address request message to the service network compliant with the requirements through the message receiving and sending unit if the information complies with the service network selecting condition.

The service network selecting condition include at least: an option information type field for identifying the information type as option information; an option information length field for identifying the length of the option information field; and an option information field for carrying the selection condition information of the client or user. The selection condition information of the client or user include at least one of: an NAI of the service network, an authentication mode supported by the service network, service network provider information, an authentication protocol selected by the client or user, an IP address requested by the client or user and an SLA desired by the client or user.

Therefore, the service network selecting unit 83 includes:
a judging subunit, adapted to: judge whether the configuration information of the service network of the service network selecting unit meets the conditions carried in the option information field according to the contents of the option information type field and the option information field in the address request message received by the message receiving and sending unit 81, and send the judgment result to the processing subunit; and
a processing subunit, adapted to instruct the message receiving and sending unit 81 to forward the received address request message to the service network of the service network selecting unit if the judgment result received from the judging subunit is that the configuration information of the service network meets the conditions.

The option information field includes at least one suboption field, and each suboption field includes at least:
a suboption type field, adapted to identify the type of the suboption;
a suboption length field, adapted to identify the length of the suboption information field; and
a suboption information field, adapted to carry service network selecting condition of the client or user, where the service network selecting condition of the client or user include at least one of: service network provider information, an authentication protocol selected by the client or user, an IP address requested by the client or user and an SLA desired by the client or user.

In this case, the judging subunit is adapted to judge whether the configuration information of the service network of the service network selecting unit 83 meets the conditions carried in the option information field according to the contents of the suboption information field of the option information field in the address request message, and send the judgment result to the processing subunit.

In this way, the service network selecting unit can select the service network compliant with the requirements of the client or user for the client or user according to the service network selecting condition of the client or user, and allocate an IP address compliant with the network service requirements to the client or user, thus improving the capabilities of serving the client or user. In practice, the apparatus may be an authenticator/proxy or an AAA server or DHCP server.

In practice, the apparatus for selecting a service network in an embodiment of the present invention involves at least the following three scenarios:

Scenario 1: As shown in FIG. 9, the apparatus for selecting a service network includes multiple message receiving and sending units 91, a configuring unit 92, and a service network selecting unit 93; and a one-to-one mapping relation exists between the message receiving and sending units 91, the configuring unit 92, and the service network selecting unit 93. In this way, each message receiving and sending unit 91 is responsible for receiving and sending the address request message of the client or user for the corresponding service network selecting unit 93, and the configuring unit 92 stores only the configuration information of the service network of the corresponding service network selecting unit 93.

Each service network selecting unit 93 reads the service network configuration information stored in the corresponding configuring unit 92 according to the service network selecting condition, judges whether the corresponding service network fulfills the requirements of the client or user, and forwards the address request message to the service network through the message receiving and sending unit 91 if the service network fulfills the requirements. The authentication mode is negotiated between the authenticating unit, the service network selecting unit, and the message sending unit of the service network to perform authentication. After completion of the authentication process, the address allocating unit allocates an IP address to the client or user. The authentication process is optional, depending on the setting of the SP. If no authentication is needed, the address allocating unit allocates an IP address to the client or user directly.

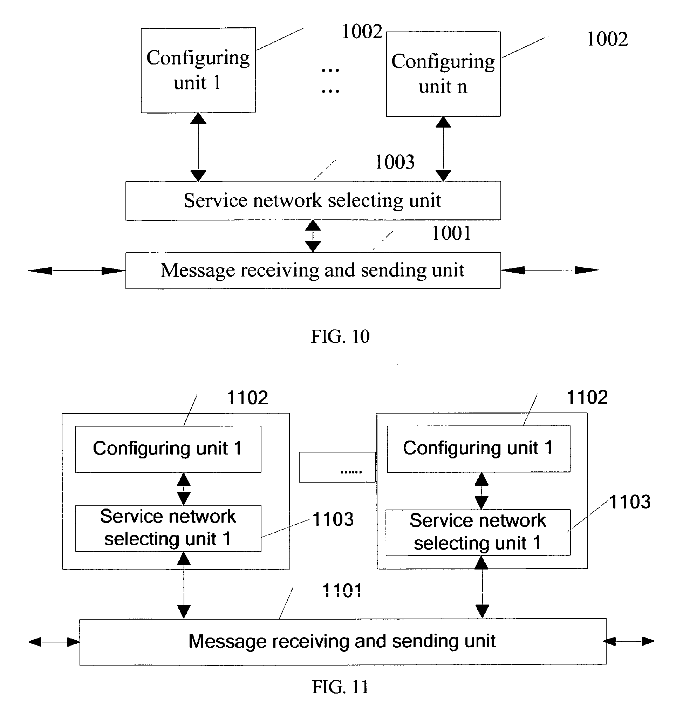

Scenario 2: As shown in FIG. 10, the apparatus for selecting a service network includes one message receiving and sending unit 1001, multiple configuring units 1002, and multiple service network selecting unit 1003; and a many-to-one relation exists between the configuring units 1002 and the service network selecting unit 1003. The service network selecting unit 1003 is connected with multiple service networks, and each configuring unit 1002 stores configuration information of the service network of at least one service network selecting unit 1003. The message receiving and sending unit 1001 receives and sends the address request message of the client or user for each service network selecting unit 1003.

The service network selecting unit 1003 reads the service network configuration information stored in each configuring unit 1002 respectively according to the service network selecting condition, judges whether the service network configuration information read by each configuring unit 1002 fulfills the service network selecting condition of the client or user, and forwards the address request message to the service network through the message receiving and sending unit if the service network configuration information fulfills the service network selecting condition. The authentication mode is negotiated between the authenticating unit, the service network selecting unit, and the message sending unit of the service network to perform authentication. After completion of the authentication process, the address allocating unit allocates an IP address to the client or user. Also, the authentication process in scenario 2 is optional. The handling process is the same as that in scenario 1.

Scenario 3: As shown in FIG. 11, the apparatus for selecting a service network includes a message receiving and sending unit 1101, multiple configuring units 1102, and multiple service network selecting units 1103; and a one-to-one mapping relation exists between the configuring units 1102 and the service network selecting units 1103. In this way, each configuring unit 1102 stores only the configuration information of the service network of the corresponding service network selecting unit 1103.

The message receiving and sending unit 1101 sends the received message to every service network selecting unit 1103 respectively. Each service network selecting unit 1103 reads the service network configuration information stored in the corresponding configuring unit according to the service network selecting condition, judges whether the corresponding service network fulfills the requirements of the client or user, and forwards the address request message to the service network through the message receiving and sending unit if the service network fulfills the requirements. The subsequent handling process is the same as the counterpart in scenario 1 or scenario 2.

In the apparatus under the present invention, the service network selecting unit judges whether the service network configuration information complies with the service network selecting condition of the client or user, and the judging mode is the same as that in the method embodiments of the present invention.

The mapping relation between the configuring unit and the service network selecting unit is not limited to the relations enumerated above, and may be configured flexibly as required.

In this embodiment, the service network selecting condition is DHCP selection option, and the definition and the composition of the DHCP selection option are the same as that in the first embodiment.

The service network selecting condition may be implemented through DHCP option 82/option 60 in the prior art, or other options.

If service network selecting condition is implemented differently, the service network selecting unit makes judgment according to the applied service network selecting condition, and selects a service network compliant with the requirements of the client or user for the client or user, thus improving the QoS.

Moreover, a system for selecting a service network is provided in an embodiment of the present invention.

The system for selecting a service network includes at least one first authenticator/proxy module and a first service network of the first authenticator/proxy module. The first authenticator/proxy module is adapted to:
configure or store configuration information of the first service network of the first authenticator/proxy module, and judge whether the configuration information of the first service network meets service network selecting condition, where the service network selecting condition is carried in an address request message in a DHCP message sent by a DHCP client or user; and
forward the address request message to the first service network that meets the condition of the first authenticator/proxy module.

Further, the system includes at least one AAA server module adapted to authenticate the DHCP client or user, and at least one DHCP server module adapted to allocate an IP address to the DHCP client or user.

The authenticator/proxy module, the AAA server module, the DHCP server module are stand-alone, or integrated in the authenticator/proxy or AAA server or DHCP server, or located in other network devices.

Further, the system may include at least one second authenticator/proxy module and a second service network of the second authenticator/proxy module. The second authenticator/proxy module is adapted to:
configure or store configuration information of the second service network of the second authenticator/proxy module, and judge whether the configuration information of the second service network meets service network selecting condition, where the service network selecting condition is carried in an address request message in a DHCP message sent by a DHCP client or user; and
forward the address request message to the second service network that meets the condition of the second authenticator/proxy module.

As described in the previous embodiment, the service network selecting condition include at least:
an option information type field, adapted to identify the information type as option information;
an option information length field, adapted to identify the length of the option information field; and
an option information field, adapted to carry service network selecting condition of the client or user, where the service network selecting condition of the client or user include at least one of: an NAI of the service network, an authentication mode supported by the service network, service network provider information, an authentication protocol selected by the client or user, an IP address requested by the client or user and an SLA desired by the client or user.

The option information field includes at least one suboption field, and each suboption field includes at least:
a suboption type field, adapted to identify the type of the suboption;
a suboption length field, adapted to identify the length of the suboption information field; and
a suboption information field, adapted to carry service network selecting condition of the client or user, where the service network selecting condition of the client or user include at least one of: service network provider information, an authentication protocol selected by the client or user, an IP address requested by the client or user and an SLA desired by the client or user.

The definition and the composition of the service network selecting condition in this embodiment are the same as those in the first method embodiment.

The service network selecting condition may be DHCP option 82/option 60 in the prior art.

If different service network selecting condition is applied, each authenticator/proxy selects a service network compliant with the requirements of the client or user according to the applied service network selecting condition, and the service network of the authenticator/proxy allocates an IP address to the client or user. For details, see the embodiment of the method for selecting a service network above.

Through the system for selecting a service network in an embodiment of the present invention, the address allocation request sent by the DHCP client or user carries service network selecting condition. In this way, the authenticator/proxy can select a service network for the client or user according to the requirements imposed by the client or user onto the service network, and allocates an IP address compliant with the network service requirements to the client or user. Therefore, the embodiments of the present invention prevent "blind" allocation of IP addresses to the client or user, and improve the capabilities of the network in serving the client or user. Through the system described above, a service network compliant with the requirements of the client or user can be selected when multiple service networks, multiple authenticators, and multiple proxies exist.

Persons of ordinary skilled in the art should understand that all or part of the steps of the method under the present invention may be implemented by a program instructing relevant hardware. The program may be stored in a computer readable storage medium. When the program runs, the steps of the method under the present invention are performed. The storage medium may be a magnetic disk, CD-ROM, Read-Only Memory (ROM), or Random Access Memory (RAM).

The above descriptions are merely preferred embodiments of the present invention, but not intended to limit the scope of the present invention.

## Claims

1. A method for selecting a service network, comprising:
receiving (T1) an address request message sent by a client or a user, wherein the address request message is carried in a Dynamic Host Configuration Protocol, DHCP, message, and the address request message carries a service network selecting condition; and
**characterized in that**,
judging (T2) whether preconfigured or stored service network configuration information fulfills the service network selecting condition of the client or user carried in the address request message, and forward the address request message to the service network that fulfills the service network selecting condition if the preconfigured or stored service network configuration information fulfills the service network selecting condition;
wherein the service network selecting condition comprises at least:
an option information type field for identifying information type as selection information;
an option information length field for identifying length of an option information field, and an option information field for carrying selection condition information of the client or user, wherein the selection condition information of the client or user comprises at least one of: an Network Access Identifier, NAI, of the service network, an authentication mode supported by the service network, service network provider information, an authentication protocol selected by the client or user, an Internet Protocol, IP, address requested by the client or user and a Service Level Agreement, SLA, desired by the client or user.

2. The method for selecting a service network according to claim 1, wherein:
the option information field comprises at least one suboption field; and
each suboption field comprises at least a suboption type field for identifying type of this suboption ; an suboption length field for identifying length of this suboption information field, and a suboption information field for carrying the selection condition information of the client or user, wherein the selection condition information of the client or user comprises at least one of: the service network provider information, the authentication protocol selected by the client or user, the IP address requested by the client or user and the SLA desired by the client or user.

3. An apparatus for selecting a service network, comprising:
a message receiving and sending unit (81), adapted to receive and send messages;
a configuring unit (82), adapted to configure or store configuration information of the service network of a service network selecting unit (83); and
**characterized in that**,
the service network selecting unit (83), adapted to: judge whether the configuration information of the service network of the service network selecting unit fulfills a service network selecting condition, wherein the service network selecting condition of the client or user is carried in an address request message in a Dynamic Host Configuration Protocol, DHCP, message received by the message receiving and sending unit (81); and instruct the message receiving and sending unit (81) to forward the address request message in the received DHCP message to the service network that fulfills the service network selecting condition if the configuration information fulfills the service network selecting condition;
wherein the service network selecting condition comprise at least:
an option information type field for identifying information type as option information,
an option information length field for identifying length of an option information field, and an option information field for carrying selection condition information of a client or user, wherein the selection condition information of the client or user comprise at least one of: an Network Access Identifier, NAI, of the service network, an authentication mode supported by the service network, service network provider information, an authentication protocol selected by the client or user, an Internet Protocol, IP, address requested by the client or user and a Service Level Agreement, SLA, desired by the client or user.

4. The apparatus for selecting a service network according to claim 3, wherein the service network selecting unit (83) comprises:
a judging subunit, adapted to: judge whether the configuration information of the service network of the service network selecting unit fulfills the conditions carried in the option information field according to contents of the option information type field and the option information field in the address request message received by the message receiving and sending unit (81), and send a judgment result to a processing subunit; and
the processing subunit, adapted to instruct the message receiving and sending unit (81) to forward the received address request message to the service network of the service network selecting unit if the judgment result received from the judging subunit is that the configuration information of the service network fulfills the conditions.

5. The apparatus for selecting a service network according to claim 3 or claim 4, wherein:
the option information field comprises at least one suboption field;
each suboption field comprises at least a suboption type field for identifying type of this suboption, an suboption length field for identifying length of this suboption information field, and a suboption information field for carrying the service network selecting condition of the client or user, wherein the service network selecting condition of the client or user comprise at least one of the service network provider information, the authentication protocol selected by the client or user, the IP address requested by the client or user and the SLA desired by the client or user; and
the judging subunit is adapted to judge whether the configuration information of the service network of the service network selecting unit (83) fulfills the conditions carried in the option information field according to contents of the suboption information field of the option information field in the address request message, and send the judgment result to the processing subunit.

6. The apparatus for selecting a service network according to claim 5, wherein:
the service network selecting condition is carried by DHCP option 82 and/or DHCP option 60 in the address request message.

7. A system for selecting a service network, comprising:
at least one first authenticator/proxy module and a first service network of the first authenticator/proxy module, wherein the first authenticator/proxy module is adapted to: configure or store configuration information of the first service network of the first authenticator/proxy module, and judge whether the configuration information of the first service network fulfills a service network selecting condition of the client or user, wherein the service network selecting condition is carried in an address request message in a DHCP message sent by a DHCP client or user; and forward the address request message to the first service network that fulfills the service network selecting condition of the first authenticator/proxy module;
at least one Authentication Authorization Accounting, AAA, server module, adapted to authenticate the DHCP client or user;
at least one DHCP server module, adapted to allocate an Internet Protocol, IP, address to the DHCP client or user;
at least one second authenticator/proxy module and a second service network of the second authenticator/proxy module, wherein the second authenticator/proxy module is adapted to: configure or store configuration information of the second service network of the second authenticator/proxy module, and judge whether the configuration information of the second service network fulfills a service network selecting condition of the client or user, wherein the service network selecting condition is carried in the address request message in the DHCP message sent by the DHCP client or user; and forward the address request message to the second service network that fulfills the service network selecting condition of the second authenticator/proxy module;
wherein the service network selecting condition comprises at least:
an option information type field for identifying an information type as option information,
an option information length field for identifying length of an option information field, and
an option information field for carrying selection condition information of the client or user, wherein the selection condition information of the client or user comprise at least one of: an Network Access Identifier, NAI, of the service network, an authentication mode supported by the service network, service network provider information, an authentication protocol selected by the client or user, an IP address requested by the client or user and a Service Level Agreement, SLA, desired by the client.

## Patentansprüche

1. Verfahren zum Auswählen eines Dienstnetzes, wobei das Verfahren Folgendes umfasst:
Empfangen (T1) einer von einem Client oder von einem Anwender gesendeten Adressenanforderungsnachricht, wobei die Adressenanforderungsnachricht in einer Dynamic-Host-Configuration-Protocol-Nachricht, DHCP-Nachricht, übermittelt wird und wobei die Adressenanforderungsnachricht eine Dienstnetz-Auswahlbedingung übermittelt; und
**dadurch gekennzeichnet, dass**
beurteilt wird (T2), ob vorkonfigurierte oder gespeicherte Dienstnetzkonfigurationsinformationen die in der Adressenanforderungsnachricht übermittelte Dienstnetz-Auswahlbedingung des Clients oder Anwenders erfüllen,
und die Adressenanforderungsnachricht an das Dienstnetz weitergeleitet wird, das die Dienstnetz-Auswahlbedingung erfüllt, falls die vorkonfigurierten oder
gespeicherten Dienstnetz-Konfigurationsinformationen die Dienstnetz-Auswahlbedingung erfüllen;
wobei die Dienstnetz-Auswahlbedingung wenigstens Folgendes umfasst:
ein Optionsinformationstypfeld zum Identifizieren des Informationstyps als Auswahlinformationen,
ein Optionsinformationslängenfeld zum Identifizieren der Länge eines Optionsinformationsfelds und ein Optionsinformationsfeld zum Übermitteln von Auswahlbedingungsinformationen des Clients oder Anwenders, wobei die Auswahlbedingungsinformationen des Clients oder Anwenders wenigstens eines der Folgenden umfassen: eine Netzzugangskennung NAI des Dienstnetzes, eine von dem Dienstnetz unterstützte Authentisierungsbetriebsart, Dienstnetz-Anbieterinformationen, ein von dem Client oder Anwender ausgewähltes Authentisierungsprotokoll, eine von dem Client oder Anwender angeforderte Internetprotokoll-Adresse, IP-Adresse, und eine von dem Client oder Anwender gewünschte Dienstgütevereinbarung SLA.

2. Verfahren zum Auswählen eines Dienstnetzes nach Anspruch 1, wobei:
das Optionsinformationsfeld wenigstens ein Unteroptionsfeld umfasst; und
jedes Unteroptionsfeld wenigstens ein Unteroptionstypfeld zum Identifizieren des Typs dieser Unteroption, ein Unteroptionslängenfeld zum Identifizieren der Länge dieses Unteroptionsinformationsfelds und ein Unteroptionsinformationsfeld zum Übermitteln der Auswahlbedingungsinformationen des Clients oder Anwenders umfasst, wobei die Auswahlbedingungsinformationen des Clients oder des Anwenders wenigstens eines der Folgenden umfassen: die Dienstnetz-Anbieterinformationen, das von dem Client oder Anwender ausgewählte Authentisierungsprotokoll, die von dem Client oder Anwender angeforderte IP-Adresse und die von dem Client oder Anwender gewünschte SLA.

3. Vorrichtung zum Auswählen eines Dienstnetzes, wobei die Vorrichtung Folgendes umfasst:
eine Nachrichtenempfangs- und -sendeeinheit (81), die zum Empfangen und Senden von Nachrichten ausgelegt ist;
eine Konfigurationseinheit (82), die zum Konfigurieren oder zum Speichern von Konfigurationsinformationen des Dienstnetzes einer Dienstnetz-Auswahleinheit (83) ausgelegt ist; und
**dadurch gekennzeichnet, dass**
die Dienstnetz-Auswahleinheit (83) zu Folgendem ausgelegt ist: Beurteilen, ob die Konfigurationsinformationen des Dienstnetzes der Dienstnetz-Auswahleinheit eine Dienstnetz-Auswahlbedingung erfüllen, wobei die Dienstnetz-Auswahlbedingung des Clients oder Anwenders in einer Adressenanforderungsnachricht in einer von der Nachrichtenempfangs- und -sendeeinheit (81) empfangenen Dynamic-Host-Configuration-Protocol-Nachricht, DHCP-Nachricht, übermittelt wird; und Anweisen, dass die Nachrichtenempfangs- und -sendeeinheit (81) die Adressenanforderungsnachricht in der empfangenen DHCP-Nachricht an dasjenige Dienstnetz weiterleitet, das die Dienstnetz-Auswahlbedingung erfüllt, falls die Konfigurationsinformationen die Dienstnetz-Auswahlbedingung erfüllen;
wobei die Dienstnetz-Auswahlbedingung wenigstens Folgendes umfasst:
ein Optionsinformationstypfeld zum Identifizieren des Informationstyps als Optionsinformationen,
ein Optionsinformationslängenfeld zum Identifizieren der Länge eines Optionsinformationsfelds, und
ein Optionsinformationsfeld zum Übermitteln von Auswahlbedingungsinformationen eines Clients oder Anwenders, wobei die Auswahlbedingungsinformationen des Clients oder Anwenders wenigstens eines der Folgenden umfassen: eine Netzzugangskennung NAI des Dienstnetzes, eine von dem Dienstnetz unterstützte Authentisierungsbetriebsart, Dienstnetz-Anbieterinformationen, ein von dem Client oder Anwender ausgewähltes Authentisierungsprotokoll, eine von dem Client oder Anwender angeforderte Internetprotokoll-Adresse, IP-Adresse, und eine von dem Client oder Anwender gewünschte Dienstgütevereinbarung SLA.

4. Vorrichtung zum Auswählen eines Dienstnetzes nach Anspruch 3, wobei die Dienstnetz-Auswahleinheit (83) Folgendes umfasst:
eine Beurteilungsuntereinheit, die für Folgendes ausgelegt ist: Beurteilen in Übereinstimmung mit Inhalten des Optionsinformationstypfelds und des Optionsinformationsfelds in der von der Nachrichtenempfangs- und -sendeeinheit (81) empfangenen Adressenanforderungsnachricht, ob die Konfigurationsinformationen des Dienstnetzes der Dienstnetz-Auswahleinheit die in dem Optionsinformationsfeld übermittelten Bedingungen erfüllen, und Senden eines Beurteilungsergebnisses an eine Verarbeitungsuntereinheit; und
die Verarbeitungsuntereinheit, die dafür ausgelegt ist, die Nachrichtenempfangs- und -sendeeinheit (81) anzuweisen, die empfangene Adressenanforderungsnachricht an das Dienstnetz der Dienstnetz-Auswahleinheit weiterzuleiten, falls das von der Beurteilungsuntereinheit empfangene Beurteilungsergebnis lautet, dass die Konfigurationsinformationen des Dienstnetzes die Bedingungen erfüllen.

5. Vorrichtung zum Auswählen eines Dienstnetzes nach Anspruch 3 oder Anspruch 4, wobei:
das Optionsinformationsfeld wenigstens ein Unteroptionsfeld umfasst;
jedes Unteroptionsfeld wenigstens ein Unteroptionstypfeld zum Identifizieren des Typs dieser Unteroption, ein Unteroptionslängenfeld zum Identifizieren der Länge dieses Unteroptionsinformationsfelds und ein Unteroptionsinformationsfeld zum Übermitteln der Dienstnetz-Auswahlbedingung des Clients oder Anwenders umfasst,
wobei die Dienstnetz-Auswahlbedingung des Clients oder Anwenders die Dienstnetz-Anbieterinformationen und/oder das von dem Client oder Anwender ausgewählte Authentisierungsprotokoll und/oder die von dem Client oder Anwender angeforderte IP-Adresse und/oder die von dem Client oder Anwender gewünschte SLA umfasst; und
die Beurteilungsuntereinheit dafür ausgelegt ist, in Übereinstimmung mit Inhalten des Unteroptionsinformationsfelds des Optionsinformationsfelds in der Adressenanforderungsnachricht zu beurteilen, ob die Konfigurationsinformationen des Dienstnetzes der Dienstnetz-Auswahleinheit (83) die in dem Optionsinformationsfeld übermittelten Bedingungen erfüllen, und das Beurteilungsergebnis an die Verarbeitungsuntereinheit zu senden.

6. Vorrichtung zum Auswählen eines Dienstnetzes nach Anspruch 5, wobei:
die Dienstnetz-Auswahlbedingung durch eine DHCP-Option 82 und/oder durch eine DHCP-Option 60 in der Adressenanforderungsnachricht übermittelt wird.

7. System zum Auswählen eines Dienstnetzes, wobei das System Folgendes umfasst:
wenigstens ein erstes Authentikator/Proxy-Modul und ein erstes Dienstnetz des ersten Authentikator/Proxy-Moduls, wobei das erste Authentikator/Proxy-Modul zu Folgendem ausgelegt ist: Konfigurieren oder Speichern von Konfigurationsinformationen des ersten Dienstnetzes des ersten Authentikator/Proxy-Moduls und Beurteilen, ob die Konfigurationsinformationen des ersten Dienstnetzes eine Dienstnetz-Auswahlbedingung des Clients oder Anwenders erfüllen, wobei die Dienstnetz-Auswahlbedingung in einer Adressenanforderungsnachricht in einer von einem DHCP-Client oder -Anwender gesendeten DHCP-Nachricht übermittelt wird; und Weiterleiten der Adressenanforderungsnachricht an das erste Dienstnetz, das die Dienstnetz-Auswahlbedingung des ersten Authentikator/Proxy-Moduls erfüllt;
wenigstens ein Authentisierungs-Berechtigungs-Abrechnungs-Servermodul, AAA-Servermodul, das zum Authentisieren des DHCP-Clients oder -Anwenders ausgelegt ist;
wenigstens ein DHCP-Servermodul, das zum Zuweisen einer Intemetprotokoll-Adresse, IP-Adresse, zu dem DHCP-Client oder -Anwender ausgelegt ist;
wenigstens ein zweites Authentikator/Proxy-Modul und ein zweites Dienstnetz des zweiten Authentikator/Proxy-Moduls, wobei das zweite Authentikator/Proxy-Modul zu Folgendem ausgelegt ist: Konfigurieren oder Speichern von Konfigurationsinformationen des zweiten Dienstnetzes des zweiten Authentikator/Proxy-Moduls und Beurteilen, ob die Konfigurationsinformationen des zweiten Dienstnetzes eine Dienstnetz-Auswahlbedingung des Clients oder Anwenders erfüllen, wobei die Dienstnetz-Auswahlbedingung in der Adressenanforderungsnachricht in der von dem DHCP-Client oder -Anwender gesendeten DHCP-Nachricht übermittelt wird; und Weiterleiten der Adressenanforderungsnachricht an das zweite Dienstnetz, das die Dienstnetz-Auswahlbedingung des zweiten Authentikator/Proxy-Moduls erfüllt;
wobei die Dienstnetz-Auswahlbedingung wenigstens Folgendes umfasst:
ein Optionsinformationstypfeld zum Identifizieren eines Informationstyps als Optionsinformationen,
ein Optionsinformationslängenfeld zum Identifizieren der Länge eines Optionsinformationsfelds und ein Optionsinformationsfeld zum Übermitteln von Auswahlbedingungsinformationen des Clients oder Anwenders, wobei die Auswahlbedingungsinformationen des Clients oder Anwenders wenigstens eines der Folgenden umfassen: eine Netzzugangskennung NAI des Dienstnetzes, eine von dem Dienstnetz unterstützte Authentisierungsbetriebsart, Dienstnetz-Anbieterinformationen, ein von dem Client oder Anwender ausgewähltes Authentisierungsprotokoll, eine von dem Client oder Anwender angeforderte IP-Adresse und eine von dem Client gewünschte Dienstgütevereinbarung SLA.

## Revendications

1. Procédé permettant de sélectionner un réseau de service, consistant à :
recevoir (T1) un message de requête d'adresse envoyé par un client ou un utilisateur, le message de requête d'adresse étant contenu dans un message DHCP, protocole de configuration dynamique d'hôte, et le message de requête d'adresse incluant une condition de sélection de réseau de service ; et
le procédé étant **caractérisé en ce qu'**il comprend l'étape consistant à juger (T2) si des informations de configuration de réseau de service préconfigurées ou stockées satisfont à la condition de sélection de réseau de service du client ou de l'utilisateur contenue dans le message de requête d'adresse, et envoyer le message de requête d'adresse au réseau de service qui satisfait à la condition de sélection de réseau de service si les informations de configuration de réseau de service préconfigurées ou stockées satisfont à la condition de sélection de réseau de service ;
la condition de sélection de réseau de service comprenant au moins :
un champ de type d'informations d'option destiné à identifier un type d'informations comme des informations de sélection,
un champ de longueur d'informations d'option destiné à identifier la longueur d'un champ d'informations d'option, et
un champ d'informations d'option destiné à contenir des informations de condition de sélection du client ou de l'utilisateur, les informations de condition de sélection du client ou de l'utilisateur comprenant au moins un élément parmi : un identifiant d'accès réseau, NAI, du réseau de service, un mode d'authentification pris en charge par le réseau de service, des informations de fournisseur de réseau de service, un protocole d'authentification sélectionné par le client ou l'utilisateur, une adresse IP, protocole Internet, demandée par le client ou l'utilisateur et un accord de niveau de service, SLA, désiré par le client ou l'utilisateur.

2. Procédé permettant de sélectionner un réseau de service selon la revendication 1, dans lequel :
le champ d'informations d'option comprend au moins un champ de sous-option ; et
chaque champ de sous-option comprend au moins un champ de type de sous-option destiné à identifier le type de cette sous-option, un champ de longueur de sous-option destiné à identifier la longueur de ce champ d'informations de sous-option, et un champ d'informations de sous-option destiné à contenir les informations de condition de sélection du client ou de l'utilisateur, les informations de condition de sélection du client ou de l'utilisateur comportant au moins un élément parmi : les informations de fournisseur de réseau de service, le protocole d'authentification sélectionné par le client ou l'utilisateur, l'adresse IP demandée par le client ou l'utilisateur et le SLA désiré par le client ou l'utilisateur.

3. Appareil permettant de sélectionner un réseau de service, comprenant :
une unité de réception et d'envoi de messages (81), adaptée pour recevoir et envoyer des messages ;
une unité de configuration (82), adaptée pour configurer ou stocker des informations de configuration du réseau de service d'une unité de sélection de réseau de service (83) ; et
l'appareil étant **caractérisé en ce que**,
l'unité de sélection de réseau de service (83) est adaptée pour : déterminer si les informations de configuration du réseau de service de l'unité de sélection de réseau de service satisfont à une condition de sélection de réseau de service, la condition de sélection de réseau de service du client ou de l'utilisateur étant contenue dans un message de requête d'adresse inclus dans un message DHCP, protocole de configuration dynamique d'hôte, reçu par l'unité de réception et d'envoi de messages (81) ; et ordonner à l'unité de réception et d'envoi de messages (81) de transmettre le message de requête d'adresse inclus dans le message DHCP reçu au réseau de service qui satisfait à la condition de sélection de réseau de service si les informations de configuration satisfont à la condition de sélection de réseau de service ;
la condition de sélection de réseau de service comprenant au moins :
un champ de type d'informations d'option destiné à identifier un type d'informations comme des informations d'option,
un champ de longueur d'informations d'option destiné à identifier la longueur d'un champ d'informations d'option, et
un champ d'informations d'option destiné à contenir des informations de condition de sélection d'un client ou d'un utilisateur, les informations de condition de sélection du client ou de l'utilisateur comprenant au moins un élément parmi : un identifiant d'accès réseau, NAI, du réseau de service, un mode d'authentification pris en charge par le réseau de service, des informations de fournisseur de réseau de service, un protocole d'authentification sélectionné par le client ou l'utilisateur, une adresse IP,
protocole Internet, demandée par le client ou l'utilisateur et un accord de niveau de service, SLA, désiré par le client ou l'utilisateur.

4. Appareil permettant de sélectionner un réseau de service selon la revendication 3, dans lequel l'unité de sélection de réseau de service (83) comprend :
une sous-unité de détermination adaptée pour : déterminer si les informations de configuration du réseau de service de l'unité de sélection de réseau de service satisfont aux conditions contenues dans le champ d'informations d'option selon le contenu du champ de type d'informations d'option et du champ d'informations d'option du message de requête d'adresse reçu par l'unité de réception et d'envoi de messages (81), et envoyer un résultat de détermination à une sous-unité de traitement ; et
la sous-unité de traitement, adaptée pour ordonner à l'unité de réception et d'envoi de messages (81) de transmettre le message de requête d'adresse reçu au réseau de service de l'unité de sélection de réseau de service si le résultat de détermination reçu de la sous-unité de détermination indique que les informations de configuration du réseau de service satisfont aux conditions.

5. Appareil permettant de sélectionner un réseau de service selon la revendication 3 ou la revendication 4, dans lequel :
le champ d'informations d'option comprend au moins un champ de sous-option ;
chaque champ de sous-option comprend au moins un champ de type de sous-option destiné à identifier le type de cette sous-option, un champ de longueur de sous-option destiné à identifier la longueur de ce champ d'informations de sous-option, et un champ d'informations de sous-option destiné à contenir la condition de sélection de réseau de service du client ou de l'utilisateur, la condition de sélection de réseau de service du client ou de l'utilisateur comportant au moins un élément parmi les informations de fournisseur de réseau de service, le protocole d'authentification sélectionné par le client ou l'utilisateur, l'adresse IP demandée par le client ou
l'utilisateur et le SLA désiré par le client ou l'utilisateur ; et
la sous-unité de détermination est adaptée pour déterminer si les informations de configuration du réseau de service de l'unité de sélection de réseau de service (83) satisfont aux conditions contenues dans le champ d'informations d'option selon le contenu du champ d'informations de sous-option du champ d'informations d'option du message de requête d'adresse, et envoyer le résultat de détermination à la sous-unité de traitement.

6. Appareil permettant de sélectionner un réseau de service selon la revendication 5, dans lequel :
la condition de sélection de réseau de service est contenue dans l'option DHCP 82 et/ou l'option DHCP 60 du message de requête d'adresse.

7. Système permettant de sélectionner un réseau de service, comprenant :
au moins un premier module proxy/d'authentification et un premier réseau de service du premier module proxy/d'authentification, le premier module proxy/d'authentification étant adapté pour : configurer ou stocker des informations de configuration du premier réseau de service du premier module proxy/d'authentification, et déterminer si les informations de configuration du premier réseau de service satisfont à une condition de sélection de réseau de service du client ou de l'utilisateur, la condition de sélection de réseau de service étant contenue dans un message de requête d'adresse inclus dans un message DHCP envoyé par un client ou un utilisateur DHCP, et transmettre le message de requête d'adresse au premier réseau de service qui répond à la condition de sélection de réseau de service du premier module proxy/d'authentification ;
au moins un module serveur AAA, comptabilité autorisation authentification, adapté pour authentifier le client ou l'utilisateur DHCP ;
au moins un module serveur DHCP, adapté pour attribuer une adresse IP, protocole Internet, au client ou à l'utilisateur DHCP ;
au moins un deuxième module proxy/d'authentification et un deuxième réseau de service du deuxième module proxy/d'authentification, le deuxième module proxy/d'authentification étant adapté pour : configurer ou stocker des informations de configuration du deuxième réseau de service du deuxième module proxy/d'authentification, et déterminer si les informations de configuration du deuxième réseau de service satisfont à une condition de sélection de réseau de service du client ou de l'utilisateur, la condition de sélection de réseau de service étant contenue dans le message de requête d'adresse inclus dans le message DHCP envoyé par le client ou l'utilisateur DHCP, et transmettre le message de requête d'adresse au deuxième réseau de service qui répond à la condition de sélection de réseau de service du deuxième module proxy/d'authentification ;
la condition de sélection de réseau de service comprenant au moins :
un champ de type d'informations d'option destiné à identifier un type d'informations comme des informations d'option,
un champ de longueur d'informations d'option destiné à identifier la longueur d'un champ d'informations d'option, et
un champ d'informations d'option destiné à contenir des informations de condition de sélection du client ou de l'utilisateur, les informations de condition de sélection du client ou de l'utilisateur comportant au moins un élément parmi : un identifiant d'accès réseau, NAI, du réseau de service, un mode d'authentification pris en charge par le réseau de service, des informations de fournisseur de réseau de service, un protocole d'authentification sélectionné par le client ou l'utilisateur, une adresse IP demandée par le client ou l'utilisateur et un accord de niveau de service, SLA, désiré par le client.
